# EUROPEAN PATENT APPLICATION

(11) **EP 4 842 125 A1**
(43) Date of publication of application: **18.11.2026**
(21) Application number: 25755160.6
(22) Date of filing: 17.01.2025
(51) Int. Cl.: H04W 72/51, H04W 72/1268, H04L 5/00, H04L 27/26, H04W 72/21

(54) **RESOURCE ALLOCATION DEVICE AND METHOD FOR IMPROVING RECEPTION PERFORMANCE OF PUCCH FORMAT 1**

(30) Priority: 13.02.2024 KR 20240020561; 05.03.2024 KR 20240031321
(71) Applicant: Samsung Electronics Co., Ltd., Suwon-si, Gyeonggi-do 16677 (KR)
(72) Inventor: KIM, Yeongsam, Suwon-si Gyeonggi-do 16677 (KR); CHOI, Youngkwan, Suwon-si Gyeonggi-do 16677 (KR)
(74) Representative: Gulde & Partner
(86) International application number: PCT/KR2025/099076
(87) International publication number: WO 2025/174162

(57) **Abstract**

The disclosure relates to a resource allocation device and method for improving the reception performance of a physical uplink control channel (PUCCH) format 1. The resource allocation method may comprise the operations of: if resource allocation of a PUCCH format 1 is required, checking whether a signal reception environment is a high speed train (HST) environment; if the signal reception environment is the HST environment according to the confirmation result, checking whether the number of HST terminals is smaller than the preset threshold value; and, if the number of HST terminals is smaller than the preset threshold value, allocating a resource of the PUCCH format 1 by setting the number of orthogonal sequences to 1.

## Description

### TECHNICAL FIELD

The following embodiments relate to a technique for allocating resources of a physical uplink control channel (PUCCH) format 1.

### BACKGROUND ART

A physical uplink control channel (PUCCH) format 1 of long-term evolution (LTE) and new radio (NR), which supports user multiplexing within the same resource block (RB), may be assigned an orthogonal sequence (OS) and a cyclic shift (CS) to generate a transmission signal, and may transmit data based on the generated transmission signal. Theoretically, since different CSs and different OSs are orthogonal to one another, there may be no mutual interference between users allocated different resources.

However, in a high speed train (HST) environment, the reception of the PUCCH format 1 may involve a very high frequency offset, so when the frequency offset is not estimated and corrected, the signal reception environment may be very poor. In addition, since the PUCCH format 1 uses user multiplexing, the frequency offset caused by the HST environment may significantly increase mutual interference between multiplexed users, resulting in a very low received signal-to-interference-plus-noise ratio (SINR). Accordingly, signal reception may not be possible even when a signal is transmitted with a large amount of power.

### SUMMARY OF THE INVENTION

### TECHNICAL GOALS

According to various embodiments of the disclosure, a resource allocation device and method for improving the reception performance of a physical uplink control channel (PUCCH) format 1 may be provided.

A resource allocation method, according to an embodiment, includes based on a determination that resource allocation of a PUCCH format 1 is to be performed, determining whether a signal reception environment is a high speed train (HST) environment, in response to the signal reception environment being the HST environment according to a result of the determination, determining whether a number of HST terminals is less than a predetermined threshold value, and in response to the number of HST terminals being less than the predetermined threshold value, allocating a resource of the PUCCH format 1 by setting a number of orthogonal sequences (OSs) to 1.

An electronic device, according to an embodiment, includes memory and a processor, wherein the processor may be configured to, based on a determination that resource allocation of a PUCCH format 1 is to be performed, determine whether a signal reception environment is an HST environment, when the signal reception environment is the HST environment according to a result of the determination, determine whether the number of HST terminals is less than a predetermined threshold value, and when the number of HST terminals is less than the predetermined threshold value, allocate a resource of the 1 PUCCH format 1 by setting the number of OSs to 1.

### BRIEF DESCRIPTION OF THE DRAWINGS

FIG. 1 is a diagram illustrating an example of a base station, including an electronic device, operating in a high speed train (HST) according to an embodiment.
FIG. 2 is a diagram illustrating a schematic configuration of an electronic device that allocates resources to improve reception performance of a physical uplink control channel (PUCCH) format 1 according to an embodiment.
FIG. 3 is a flowchart illustrating a process of allocating resources to improve reception performance of a PUCCH format 1 according to an embodiment.

### BEST MODE(S) FOR CARRYING OUT THE INVENTION

Hereinafter, embodiments will be described in detail with reference to the accompanying drawings. However, various modifications may be made to the embodiments, and the scope of the disclosure is not limited or restricted by the embodiments. The embodiments should be understood to include all changes, equivalents, and replacements within the idea and the technical scope of the disclosure.

The terms used in the embodiments are for descriptive purposes only and should not be construed as limiting. The singular forms "a," "an," and "the" are intended to include the plural forms as well, unless the context clearly indicates otherwise. It will be further understood that the terms "comprises/comprising" or "includes/including" when used herein, specify the presence of stated features, integers, steps, operations, elements, components, or groups thereof, but do not preclude the presence or addition of one or more other features, integers, steps, operations, elements, components, or groups thereof.

Unless otherwise defined herein, all terms used herein including technical or scientific terms have the same meanings as those generally understood by one of ordinary skill in the art. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

When describing the embodiments with reference to the accompanying drawings, like reference numerals refer to like components and a repeated description related thereto will be omitted. In the description of embodiments, detailed description of well-known related technology will be omitted when it is deemed that such description will cause ambiguous interpretation of the disclosure.

In addition, the terms first, second, A, B, (a), and (b) may be used to describe components of the embodiments. Each of these terms is not used to define an essence, order, or sequence of corresponding components, but used merely to distinguish the corresponding components from other components. When it is mentioned that one component is "connected" or "coupled" to, or "accessed" by another component, it may be understood that the one component is directly connected or coupled to or accessed by another component or that still another component is interposed between the two components.

Components included in an embodiment and components that have common functions will be described using the same names in other embodiments. Unless stated otherwise, the description of any one embodiment may be applied to other embodiments, and the specific description of the repeated configuration will be omitted.

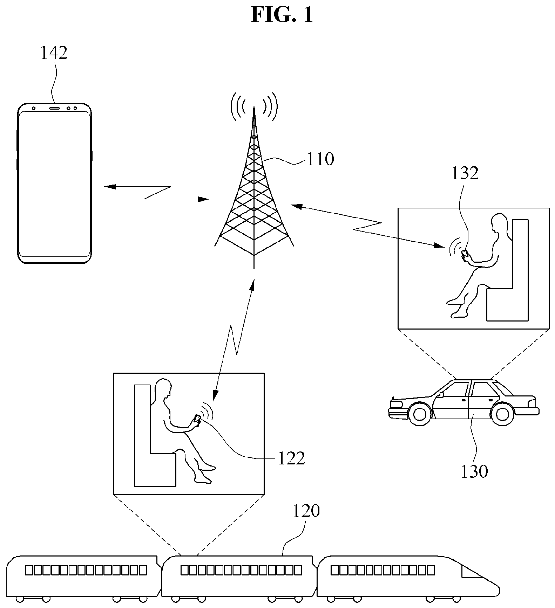

Hereinafter, a resource allocation device and a method for improving reception performance of a physical uplink control channel (PUCCH) format 1 according to an embodiment are described in detail with reference to FIGS. 1 to 3.

FIG. 1 is a diagram illustrating an example of a base station operating in a high speed train (HST) environment according to an embodiment.

Referring to FIG. 1, a base station 110 (or electronic device 110) may allocate resources of a PUCCH format 1 by limiting the number of orthogonal sequences (OSs) depending on whether the base station 110 is located in an HST environment.

When the base station 110 is installed near a track where a high-speed train 120 passes, a cell provided by the base station 110 may be configured as an HST cell, and all communicating terminals 122, 132, and 142 may be determined and processed as HST terminals that operate in the HST environment.

The base station 110 may identify the terminal 122 located in the high-speed train 120 moving at high speed and the terminal 132 located in a vehicle 130 moving at high speed, and determine and process only the terminals 122 and 132 moving at high speed as HST terminals.

Here, when the base station 110 receives a physical uplink shared channel (PUSCH) signal and the reported frequency offset is greater than or equal to a predetermined reference value or when the speed of a terminal reported by the terminal is greater than or equal to a predetermined speed, the terminal may be determined to be the terminal 122 or the terminal 132 that is moving at high speed.

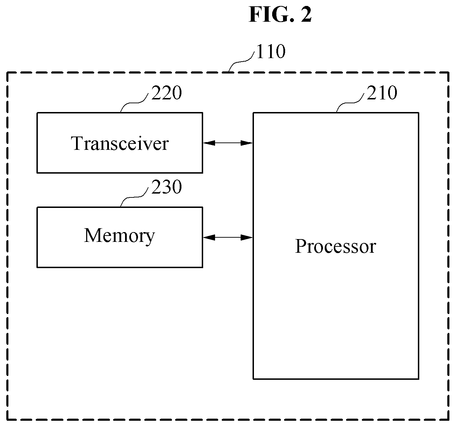

FIG. 2 is a diagram illustrating a schematic configuration of an electronic device that allocates resources to improve reception performance of a PUCCH format 1 according to an embodiment.

Referring to FIG. 2, the electronic device 110 may include a processor 210, a transceiver 220, and memory 230.

The transceiver 220 may be a communication interface device including a receiver and a transmitter, and may transmit and receive data by wire or wirelessly.

The transceiver 220 may support establishment of a wireless communication channel between the electronic device 110 and an external electronic device or between terminals, and support communication through the established communication channel. The transceiver 220 may include one or more communication processors (CPs) that operate independently of the processor 210 (e.g., an application processor (AP)) and may support wireless communication.

The transceiver 220 may support a fifth generation (5G) network after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The transceiver 220 may support a high-frequency band (e.g., a millimeter wave (mmWave) band) to achieve, for example, a high data transmission rate. The transceiver 220 may support various technologies for securing performance on a high-frequency band, such as, for example, beamforming, massive multiple-input and multiple-output (massive MIMO), full dimensional MIMO (FD-MIMO), an array antenna, analog beamforming, or a large scale antenna. The transceiver 220 may support various requirements specified in the electronic device 210.

The memory 230 may store various types of data used by at least one component (e.g., the processor 210) of the electronic device 110. The various data may include, for example, software (e.g., a program) and input data or output data for a command related thereto. The memory 230 may include volatile memory or non-volatile memory.

Based on a determination that resource allocation of a PUCCH format 1 is to be performed, the processor 210 may determine whether a signal reception environment is an HST environment, and when the signal reception environment is the HST environment according to a result of the determination, the processor 210 may determine whether the number of HST terminals is less than a predetermined threshold value, and when the number of HST terminals is less than the predetermined threshold value, the processor 210 may allocate a resource of the PUCCH format 1 by setting the number of OSs to 1.

When the location of the electronic device 110 is in a predetermined HST cell, the processor 210 may determine that the electronic device 110 is located in the HST environment.

The processor 210 may determine that a terminal of which a frequency offset reported upon receiving a PUSCH signal is greater than or equal to a predetermined reference value is in the HST environment.

The processor 210 may determine that the terminal is in the HST environment when the speed of the terminal reported by the terminal is greater than or equal to a predetermined speed.

When the resource of the PUCCH format 1 is allocated by setting the number of OSs to 1, the processor 210 may assign the same OS value and a different cyclic shift (CS) value to an HST terminal within the same resource block (RB).

When the number of OSs is set to 1, the maximum number of users allocable to the same RB may be limited to 12.

When the processor 210 receives the PUCCH format 1 in which the number of OSs is set to 1, the processor 210 may perform user demultiplexing on the PUCCH format 1 using orthogonal characteristics of a CS to secure received symbol data or a demodulation reference signal (DMRS) for each user equal to the length of the OS, estimate the frequency offset using the received symbol data or the DMRS secured for each user, and correct the PUCCH format 1.

More specifically, the processor 210 may reduce mutual interference caused by frequency offsets between multiplexed users in the HST environment and also assign the same OS according to the length of the OS in order to apply a two-symbol-based frequency offset estimation algorithm.

When the number of OSs is limited to 1 and user multiplexing is performed based on the CS, a signal reception method may be as follows.

*y_{i,k}* denotes a received signal of an i-th tone and a k-th symbol. Two users may be multiplexed in the received signal. The received signal may be a data symbol or a DMRS symbol. In the case of the PUCCH format 1, the frequency offset may be estimated from both the data symbol and DMRS.

When the CSs of each user u and *v* are different and the OS values are assigned identically, then the values of *cᵤ* and *cᵥ* may be different, and *oᵤ* and *oᵥ* may be the same.

When the processor 210 allocates the PUCCH format 1 to a user in the HST cell environment, user demultiplexing may be performed and the frequency offset may be estimated as follows. In the received signal *y_{i,k}* of <Equation 1> below, f*ᵤ* and f*ᵥ* denote frequency offsets of the users *u* and v respectively, and *θᵤ* and *θᵥ* denote initial phase values of the frequency offsets of the users u and v, respectively. [Equation 1] ${y}_{i , k} = {d}_{u} {e}^{j 2 π {f}_{u} k + {θ}_{u}} + {d}_{v} {e}^{j 2 π {f}_{v} k + {θ}_{v}} + {n}_{i , k}$

Here, *n_{i,k}* denotes a noise signal of the i-th tone and the k-th symbol, *dᵤ* denotes a transmission signal of the user u, and *dᵥ* denotes a transmission signal of the user v.

In order to estimate the frequency offset of the received signal by limiting the number of OSs to 1 and performing user multiplexing based on a CS, user demultiplexing may first be performed using the orthogonal characteristics of the CS. In the case of the user u, when the received signal is multiplied and accumulated by a Hermitian value of the CS assigned to the user *u,* the signal of the user *k* may be removed. When the received signal after user multiplexing is performed is denoted as *zₖ*, it may be expressed by <Equation 2> below. [Equation 2] $\begin{matrix}{z}_{k} = \frac{1}{12} {\sum }_{i = 0}^{11} {y}_{i , k} {e}^{- j 2 {πc}_{u} \frac{i}{12}} \\ = {d}_{u} {e}^{j 2 {πo}_{u} \frac{k}{K}} {e}^{j 2 π {f}_{u} k + {θ}_{u}} + n {′}_{i , k}\end{matrix}$ *where* $n {′}_{i , k} = \frac{1}{12} {\sum }_{i = 0}^{11} {n}_{i , k} {e}^{- j 2 {πc}_{u} \frac{i}{12}}$

Here, *dᵤ* denotes the transmission signal of the user u.

Since *cᵤ* and *cᵥ* are different values, the signal of the user *k* may become 0 as expressed by <Equation 3> below. [Equation 3] $\frac{1}{12} {\sum }_{i = 0}^{11} {s}_{i , k , v} {e}^{j 2 π {f}_{v} k + {θ}_{v}} {e}^{- j 2 {πc}_{u} \frac{i}{12}} = {d}_{v} {e}^{j 2 {πo}_{v} \frac{k}{K}} {e}^{j 2 π {f}_{v} k + {θ}_{v}} {\sum }_{i = 0}^{11} {e}^{j 2 π \left({c}_{v -}{c}_{u}\right) \frac{i}{12}} = 0$

Here, *dᵥ* denotes the transmission signal of the user v.

In <Equation 3>, the value of the OS assigned along the time axis is not yet removed. However, demultiplexing between users allocated within the same RB is completed, so the DMRS or data symbol equal to the length of the OS may remain.

The signal reception method of the disclosure may estimate the frequency offset using the DMRS or data symbol equal to the length of the remaining OS after demultiplexing is completed. Here, when a length *K* of the OS is 2, the frequency offset may be estimated through the correlation between two symbols in the DMRS or data symbol.

The signal reception method may measure the amount of phase change due to the frequency offset through symbol correlation after removing the OS assigned to the user u from the received signal after de-correlation of the CS is completed. The signal reception method may estimate the frequency offset based on the measured amount of phase change, which may be expressed by <Equation 4> below. [Equation 4] $\begin{matrix}\left\{{z}_{1}{e}^{- j 2 {πo}_{u} \frac{1}{K}}\right\} {\left\{{z}_{0}{e}^{- j 2 {πo}_{u} \frac{0}{K}}\right\}}^{H} \\ = \left\{\left(\frac{1}{12}{\sum }_{i = 0}^{11} {y}_{i , 1} {e}^{- j 2 {πc}_{u} \frac{i}{12}}\right){e}^{- j 2 {πo}_{u} \frac{1}{K}}\right\} {\left\{\left(\frac{1}{12}{\sum }_{i = 0}^{11} {y}_{i , 0} {e}^{- j 2 {πc}_{u} \frac{i}{12}}\right){e}^{- j 2 {πo}_{u} \frac{0}{K}}\right\}}^{H} \\ = \left({d}_{u}{e}^{j 2 π {f}_{u} + {θ}_{u}}+n{"}_{i , 1}\right) {\left({d}_{u}{e}^{{jθ}_{u}}+n{"}_{i , 0}\right)}^{H} \\ = {\left|{d}_{u}\right|}^{2} {e}^{j 2 π {f}_{u}} + n ‴\end{matrix}$ *where* $n {′}_{i , k} = \frac{1}{12} {\sum }_{i = 0}^{11} {n}_{i , k} {e}^{- j 2 {πc}_{u} \frac{i}{12}}$ *where* $n {"}_{i , 0} = {e}^{- j 2 {πo}_{u} \frac{0}{K}} \frac{1}{12} {\sum }_{i = 0}^{11} {n}_{i , 0} {e}^{- j 2 {πc}_{u} \frac{i}{12}}$ *and* $n ‴ = {d}_{u} {e}^{j 2 π {f}_{u} + {θ}_{u}} n {{"}^{H}}_{i , 0} + {d}_{u}^{H} {e}^{- {jθ}_{u}} n {"}_{i , 1} + n {"}_{i , 1} n {{"}^{H}}_{i , 0}$

Here, ${e}^{- j 2 {πo}_{u} \frac{0}{K}}$ denotes the Hermitian of a 0th OS value assigned to the user u.

As described above, the disclosure may estimate the amount of phase change |*dᵤ*|²e^{*j*2πf*u*} + *n*‴ due to the frequency offset f*ᵤ* over the length of one symbol. In addition, after removing the estimated frequency offset, the symbols may be accumulated to calculate the final accumulated values of the data symbol and DMRS.

When the number of HST terminals is greater than or equal to a predetermined threshold value, the processor 210 may allocate the resource of the PUCCH format 1 by setting the number of OSs to 2 so that at least two data symbols or DMRSs remain.

When the processor 210 allocates the resource of the PUCCH format 1 by setting the number of OSs to 2, the length of the OS may only be set to 4 or 6.

When the number of OSs is set to 2, the maximum number of users allocable to the same RB may be limited to 24.

When the processor 210 receives the PUCCH format 1 in which the number of OSs is set to 2, the processor 210 may perform user demultiplexing on the PUCCH format 1 using the orthogonal characteristics of the CS, and perform the user demultiplexing based on the OS using two or three symbols to estimate the frequency offset, and correct the PUCCH format 1.

When the number of OSs is limited to 2, a method of calculating the frequency offset after user multiplexing is performed may be as follows.

*y_{i,k}* denotes the received signal of the i-th tone and the k-th symbol. Two users may be multiplexed in the received signal. The received signal may be a data symbol or a DMRS symbol. In the case of the PUCCH format 1, the frequency offset may be estimated from both the data symbol and DMRS.

When the CSs of each of the users u and *v* are identical, and the OS values are assigned differently, then the values of *cᵤ* and *cᵥ* may be the same, and *oᵤ* and *oᵥ* may be different.

When the processor 210 allocates the PUCCH format 1 to a user in the HST cell environment, user demultiplexing may be performed and the frequency offset may be estimated as follows. In the received signal *y_{i,k}* of <Equation 5> below, f*ᵤ* and f*ᵥ* denote frequency offsets of the users *u* and v, respectively, and *θᵤ* and *θᵥ* denote initial phase values of the frequency offsets of the users u and v, respectively. [Equation 5] ${y}_{i , k} = {d}_{u} {e}^{j 2 π {f}_{u} k + {θ}_{u}} + {d}_{v} {e}^{j 2 π {f}_{v} k + {θ}_{v}} + {n}_{i , k}$

Here, *n_{i,k}* denotes a noise signal of the i-th tone and the k-th symbol, *dᵤ* denotes the transmission signal of the user u, and *dᵥ* denotes the transmission signal of the user v.

In order to estimate the frequency offset of the received signal by limiting the number of OSs to 2 and performing user multiplexing based on a CS, user demultiplexing may first be performed using the orthogonal characteristics of the CS. In the case of the user *u,* may be multiplied by the Hermitian value of the CS assigned to the user *u.* Here, since the user v also has the same CS value, the signal of the user *v* may also still exist. When the received signal after user multiplexing is performed is denoted as *zₖ,* it may be expressed by <Equation 6> below. [Equation 6] $\begin{matrix}{z}_{k} = \frac{1}{12} {\sum }_{i = 0}^{11} {y}_{i , k} {e}^{- j 2 {πc}_{u} \frac{i}{12}} = {d}_{u} {e}^{j 2 {πo}_{u} \frac{k}{K}} {e}^{j 2 π {f}_{u} k + {θ}_{u}} + {d}_{v} {e}^{j 2 {πo}_{v} \frac{k}{K}} {e}^{j 2 π {f}_{v} k + {θ}_{v}} + n {′}_{i , k} \\ where n {′}_{i , k} = \frac{1}{12} {\sum }_{i = 0}^{11} {n}_{i , k} {e}^{- j 2 {πc}_{u} \frac{i}{12}}\end{matrix}$

Here, *dᵤ* denotes the transmission signal of the user u, and *dᵥ* denotes the transmission signal of the user v.

First, when the length of the OS is 4, the OS may have 4 sequence values as expressed by <Equation 7> below. [Equation 7] ${w}_{i} = \left\{\begin{matrix}1 , & 1 , & 1 , & 1 \\ 1 , & - 1 , & 1 , & - 1 \\ 1 , & 1 , & - 1 , & - 1 \\ 1 , & - 1 , & - 1 , & 1\end{matrix}\right\}$

In a code table of the OS in <Equation 7> above, when the length of the OS is 4 and up to two users have different OS values, user demultiplexing based on the OS may be possible using only two symbols. For example, when the user u is assigned *w*₀ and the user u is assigned *w*₁, user demultiplexing based on the OS may be possible by distinguishing between the first two symbols and the last two symbols and adding or subtracting them. Accordingly, in the disclosure, user demultiplexing based on the OS may be performed using the above-described characteristics, and then frequency offset estimation may be performed based on the two resulting symbols.

The number of OSs is limited in the disclosure because, for example, when four users are all assigned different OSs (in the case of a general cell), OS-based user demultiplexing is possible only when all four symbols are used, and thus, as described above, OS-based user demultiplexing may not be performed by distinguishing between the first two symbols and the last two symbols and adding or subtracting them.

A formula for performing OS-based user demultiplexing using only two symbols from the perspective of the user u may be as follows. First, when the users uand *v*are assigned *w*₀and *w*₁respectively, and the result of OS-based user demultiplexing based on the first two symbols is *a*₀, and the result of OS-based user demultiplexing based on the last two symbols is *a*₁, it may be expressed by <Equation 8> below. [Equation 8] $\begin{matrix}{a}_{0} = \frac{1}{2} \left({z}_{0}{e}^{- j 2 {πo}_{u} \frac{0}{K}}+{z}_{1}{e}^{- j 2 {πo}_{u} \frac{1}{K}}\right) \\ = \frac{1}{2} {d}_{u} \left({e}^{{jθ}_{u}}+{e}^{j 2 π {f}_{u} + {θ}_{u}}\right) + \frac{1}{2} {d}_{v} \left({e}^{{jθ}_{v}}-{e}^{j 2 π {f}_{v} + {θ}_{v}}\right) + n {"}_{0}\end{matrix}$ *where* $n {"}_{0} = \frac{1}{2} \left(n{′}_{i , 0}{e}^{- j 2 {πo}_{u} \frac{0}{K}}+n{′}_{i , 1}{e}^{- j 2 {πo}_{u} \frac{1}{K}}\right)$ $\begin{matrix}{a}_{1} = \frac{1}{2} \left({z}_{2}{e}^{- j 2 {πo}_{u} \frac{2}{K}}+{z}_{3}{e}^{- j 2 {πo}_{u} \frac{3}{K}}\right) \\ = \frac{1}{2} {d}_{u} \left({e}^{j 2 π {f}_{u} 2 + {θ}_{u}}+{e}^{j 2 π {f}_{u} 3 + {θ}_{u}}\right) + \frac{1}{2} {d}_{v} \left({e}^{j 2 π {f}_{v} 2 + {θ}_{v}}-{e}^{j 2 π {f}_{v} 3 + {θ}_{v}}\right) + n {"}_{1}\end{matrix}$

In other words, the result of <Equation 8> may indicate that the signal of the user *v* is not completely removed depending on the difference in frequency offset per user. Interference $\frac{1}{2} {d}_{v} \left({e}^{{jθ}_{v}}-{e}^{j 2 π {f}_{v} + {θ}_{v}}\right)$ of the user *v* may still remain from the perspective of the user u. Therefore, compared to a scheme of allocating only one OS per RB in an HST cell, performance may decrease, but there may be an advantage of doubling the maximum number of users that may be allocated.

Thereafter, the frequency offset of the user u may be estimated by correlating the two results as expressed by <Equation 9>. [Equation 9] $\begin{matrix}{a}_{1} {a}_{0}^{H} = \frac{1}{2} {\left|{d}_{u}\right|}^{2} \left(2{e}^{j 2 π {f}_{u} 2}+{e}^{j 2 π {f}_{u}}+{e}^{j 2 π {f}_{u} 3}\right) + \frac{1}{2} {\left|{d}_{v}\right|}^{2} \left(2{e}^{j 2 π {f}_{u} 2}-{e}^{j 2 π {f}_{u}}-{e}^{j 2 π {f}_{u} 3}\right) \\ + n ‴\end{matrix}$

In the case of the frequency offset, the amount of phase change may be important, so with respect to the frequency offset of the user u, a phase value that changes for two symbols in a $\frac{1}{2} {\left|{d}_{u}\right|}^{2} \left(2{e}^{j 2 π {f}_{u} 2}+{e}^{j 2 π {f}_{u}}+{e}^{j 2 π {f}_{u} 3}\right)$ term may be estimated, and for the interference, a $\frac{1}{2} {\left|{d}_{v}\right|}^{2} \left(2{e}^{j 2 π {f}_{u} 2}-{e}^{j 2 π {f}_{u}}-{e}^{j 2 π {f}_{u} 3}\right)$ term may exist but may be relatively small in magnitude.

As described above, the disclosure may estimate the amount of phase change $\frac{1}{2} {\left|{d}_{u}\right|}^{2} \left(2{e}^{j 2 π {f}_{u} 2}+{e}^{j 2 π {f}_{u}}+{e}^{j 2 π {f}_{u} 3}\right)$ due to the frequency offset f*ᵤ* over the length of two symbols, and may calculate the final accumulated values of the data symbol and DMRS by accumulating the symbols after removing the estimated frequency offset.

Next, when the length of the OS is 6, the OS may have 6 sequence values as expressed by <Equation 10> below. [Equation 10] ${w}_{i} = \left\{\begin{matrix}1 , 1 , 1 , 1 , 1 , 1 \\ 1 , {e}^{j 2 π \frac{1}{6}} , {e}^{j 2 π \frac{2}{6}} , {e}^{j 2 π \frac{3}{6}} , {e}^{j 2 π \frac{4}{6}} , {e}^{j 2 π \frac{5}{6}} \\ 1 , {e}^{j 2 π \frac{2}{6}} , {e}^{j 2 π \frac{4}{6}} , 1 , {e}^{j 2 π \frac{2}{6}} , {e}^{j 2 π \frac{4}{6}} \\ 1 , {e}^{j 2 π \frac{3}{6}} , 1 , {e}^{j 2 π \frac{3}{6}} , 1 , {e}^{j 2 π \frac{3}{6}} \\ 1 , {e}^{j 2 π \frac{4}{6}} , {e}^{j 2 π \frac{2}{6}} , 1 , {e}^{j 2 π \frac{4}{6}} , {e}^{j 2 π \frac{2}{6}} \\ 1 , {e}^{j 2 π \frac{5}{6}} , {e}^{j 2 π \frac{4}{6}} , {e}^{j 2 π \frac{3}{6}} , {e}^{j 2 π \frac{2}{6}} , {e}^{j 2 π \frac{1}{6}}\end{matrix}\right\}$

In a code table of the OS shown above, when the length of the OS is 6 and up to two users have different OS values, OS-based user demultiplexing may be possible using only two or three symbols.

For example, when the user *u* is assigned *w*₀ and the user *u* is assigned *w*₃, OS-based user demultiplexing may be possible by distinguishing between the first two symbols, the next two symbols, and the last two symbols and adding or subtracting them.

In addition, when the user *u* is assigned *w*₀ and the user *u* is assigned *w*₂, OS-based user demultiplexing may be possible by distinguishing between the first three symbols and the last three symbols and adding or subtracting them.

Accordingly, the disclosure may enable frequency offset estimation based on two or three resulting symbols after performing OS-based user demultiplexing using the above-described characteristics.

Hereinafter, a method according to the disclosure configured as described above is described with reference to the drawings.

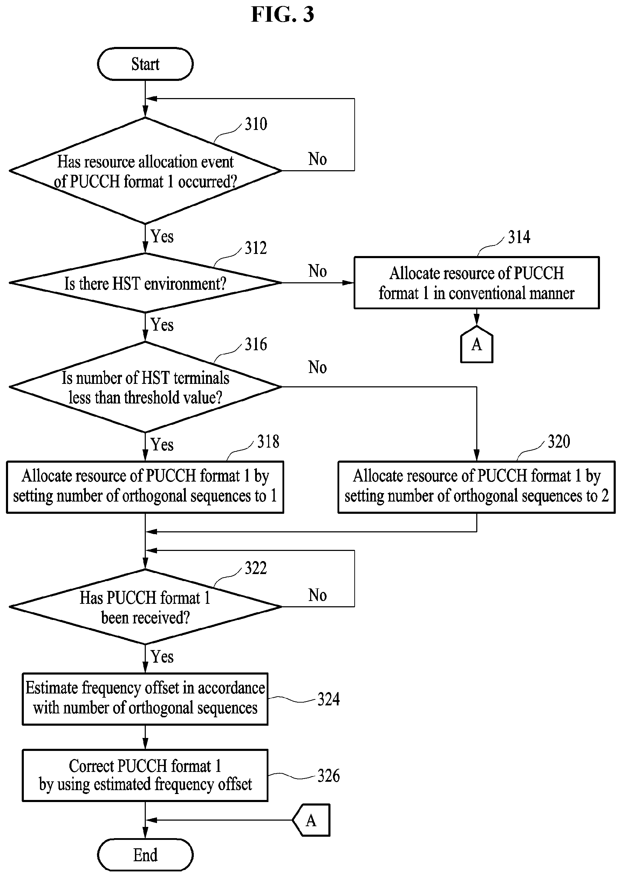

FIG. 3 is a flowchart illustrating a process of allocating resources to improve reception performance of a PUCCH format 1 according to an embodiment.

Referring to FIG. 3, in operation 310, when an electronic device (e.g., the electronic device 110 of FIG. 2) detects that a resource allocation event of a PUCCH format 1 has occurred, in operation 312, the electronic device may determine whether a signal reception environment is an HST environment.

In operation 312, when the electronic device is located in a predetermined HST cell, it may be determined that the electronic device is located in the HST environment.

In operation 312, the electronic device may determine that a terminal of which a frequency offset reported upon receiving a PUSCH signal is greater than or equal to a predetermined reference value is in the HST environment.

In operation 312, the electronic device may determine that the terminal is in the HST environment when the speed of the terminal reported by the terminal is greater than or equal to a predetermined speed.

When the signal reception environment is not the HST environment according to a result of the determination in operation 312, in operation 314, the electronic device may perform resource allocation of the PUCCH format 1 in a conventional manner.

When the signal reception environment is the HST environment according to a result of the determination in operation 312, in operation 316, the electronic device may determine whether the number of HST terminals is less than a predetermined threshold value.

When the number of HST terminals is less than the predetermined threshold value according to a result of the determination in operation 316, in operation 318, the electronic device may set the number of OSs to 1 and allocate a resource of the PUCCH format 1.

In operation 318, the electronic device may assign the same OS value and a different CS value to an HST terminal within the same RB. Here, when the number of OSs is set to 1, the maximum number of users allocable to the same RB may be limited to 12.

When the number of HST terminals is greater than or equal to the predetermined threshold value according to a result of the determination in operation 316, in operation 320, the electronic device may set the number of OSs to 2 and allocate a resource of the PUCCH format 1.

In operation 320, when the electronic device demultiplexes the OS, the electronic device may allocate the resource of the PUCCH format1 such that at least two data symbols or DMRSs remain.

In operation 320, when the electronic device allocates the resource of the PUCCH format 1 by setting the number of OSs to 2, the length of the OS may only be set to 4 or 6. Here, when the number of OSs is set to 2, the maximum number of users allocable to the same RB may be limited to 24.

In operation 322, when the electronic device receives the PUCCH format 1, in operation 324, the electronic device may estimate the frequency offset according to the number of OSs. Additionally, in operation 326, the electronic device may correct the PUCCH format 1 using the estimated frequency offset.

In operation 324, when the electronic device receives the PUCCH format 1 in which the number of OSs is set to 1, the electronic device may perform user demultiplexing on the PUCCH format 1 using orthogonal characteristics of a CS to secure received symbol data or DMRS for each user equal to the length of the OS, and estimate the frequency offset using the received symbol data or the DMRS secured for each user.

In operation 324, when the electronic device receives the PUCCH format 1 in which the number of OSs is set to 2, the electronic device may perform user demultiplexing on the PUCCH format 1 using the orthogonal characteristics of the CS, and perform the user demultiplexing, using two or three symbols, based on the OS, to estimate the frequency offset, and correct the PUCCH format 1.

According to an embodiment, a resource allocation method may include, based on a determination that resource allocation of a PUCCH format 1 is to be performed, determining whether a signal reception environment is an HST environment, when the signal reception environment is the HST environment according to a result of the determination, determining whether the number of HST terminals is less than a predetermined threshold value, and when the number of HST terminals is less than the predetermined threshold value, allocating a resource of the 1 PUCCH format 1 by setting the number of OSs to 1.

According to an embodiment, the determining of whether the signal reception environment is the HST environment may include when a base station is located in a predetermined HST cell, determining that the signal reception environment is the HST environment.

According to an embodiment, the determining of whether the signal reception environment is the HST environment may include determining that a terminal of which a frequency offset reported upon receiving a PUSCH signal is greater than or equal to a predetermined reference value is in the HST environment.

According to an embodiment, the determining of whether the signal reception environment is the HST environment may include when the speed of the terminal reported by the terminal is greater than or equal to a predetermined speed, determining that the terminal is in the HST environment.

According to an embodiment, the allocating of the resource of the PUCCH format 1 by setting the number of OSs to 1 when the number of HST terminals is less than the predetermined threshold value may include assigning the same OS value and a different CS value to an HST terminal within the same RB.

According to an embodiment, when the number of OSs is set to 1, the maximum number of users allocable to the same RB may be limited to 12.

According to an embodiment, the resource allocation method may further include receiving the PUCCH format 1 in which the number of OSs is set to 1, performing user demultiplexing on the PUCCH format 1 using orthogonal characteristics of a CS to secure received symbol data or a DMRS for each user equal to the length of the OS, and estimating the frequency offset using the received symbol data or the DMRS secured for each user and correcting the PUCCH format 1.

According to an embodiment, the resource allocation method may further include allocating the resource of the PUCCH format 1 by setting the number of OSs to 2 when the number of the HST terminals is greater than or equal to the predetermined threshold value.

According to an embodiment, the allocating of the resource of the PUCCH format 1 by setting the number of OSs to 2 may include allocating a PUCCH resource such that at least two data symbols or DMRSs remain when demultiplexing the OS.

According to an embodiment, the allocating of the resource of the PUCCH format 1 by setting the number of OSs to 2 may include setting the length of the OS to 4 or 6.

According to an embodiment, when the number of OSs is set to 2, the maximum number of users allocable to the same RB may be limited to 24.

According to an embodiment, the resource allocation method may further include receiving the PUCCH format 1 in which the number of OSs is set to 2, performing user demultiplexing on the PUCCH format 1 using orthogonal characteristics of a CS, and estimating a frequency offset by performing user demultiplexing, using two or three symbols, based on an OS, and correcting the PUCCH format 1.

According to an embodiment, an electronic device includes memory and a processor, wherein the processor may be configured to, based on a determination that resource allocation of a PUCCH format 1 is to be performed, determine whether a signal reception environment is an HST environment, when the signal reception environment is the HST environment according to a result of the determination, determine whether the number of HST terminals is less than a predetermined threshold value, and when the number of HST terminals is less than the predetermined threshold value, allocate a resource of the 1 PUCCH format 1 by setting the number of OSs to 1.

According to an embodiment, the processor may determine that the signal reception environment is the HST environment when the electronic device is located in a predetermined HST cell, determine that a terminal of which a frequency offset reported upon receiving a PUSCH signal is greater than or equal to a predetermined reference value is in the HST environment, and determine that the terminal is in the HST environment when the speed of the terminal reported by the terminal is greater than or equal to a predetermined speed.

According to an embodiment, when the resource of the PUCCH format 1 is allocated by setting the number of OSs to 1, the processor may assign the same OS value and a different CS value to an HST terminal within the same RB.

According to an embodiment, when the processor receives the PUCCH format 1 in which the number of OSs is set to 1, the processor may perform user demultiplexing on the PUCCH format 1 using orthogonal characteristics of a CS to secure received symbol data or a DMRS for each user equal to the length of the OS, and estimate the frequency offset using the received symbol data or the DMRS secured for each user, and correct the PUCCH format 1.

According to an embodiment, when the number of HST terminals is greater than or equal to the predetermined threshold value, the processor may allocate the resource of the PUCCH format 1 by setting the number of OSs to 2 so that at least two data symbols or DMRSs remain.

According to an embodiment, when the processor allocates the resource of the PUCCH format 1 by setting the number of OSs to 2, the length of the OS may be set to 4 or 6.

According to an embodiment, when the processor receives the PUCCH format 1 in which the number of OSs is set to 2, the processor may perform user demultiplexing on the PUCCH format 1 using orthogonal characteristics of a CS, and estimate a frequency offset by performing user demultiplexing, using two or three symbols, based on an OS, and correct the PUCCH format 1.

The method according to the embodiments described above may be recorded in non-transitory computer-readable storage media including program instructions to implement various operations of the embodiments described above. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape, optical media such as compact disc read-only memory (CD-ROM) discs and digital video discs (DVDs), magneto-optical media such as floptical disks, and hardware devices that are specifically configured to store and perform program instructions, such as read-only memory (ROM), random access memory (RAM), flash memory, and the like. Examples of program instructions include both machine code, such as code produced by a compiler, and files containing higher level code that may be executed by the computer using an interpreter. The above-described hardware devices may be configured to act as one or more software modules in order to perform the operations of the above-described embodiments, or vice versa.

Software may include a computer program, a piece of code, an instruction, or one or more combinations thereof, to independently or collectively instruct or configure a processing device to operate as desired. Software and data may be stored in any type of machine, component, physical or virtual equipment, or computer storage medium or device capable of providing instructions or data to or being interpreted by the processing device. The software also may be distributed over network-coupled computer systems so that the software is stored and executed in a distributed fashion. The software and data may be stored by one or more non-transitory computer-readable recording mediums.

Although the embodiments have been described with reference to the limited drawings, one of ordinary skill in the art may apply various technical modifications and variations based thereon. For example, appropriate results may be achieved if the described techniques are performed in a different order, and/or if components in a described system, structure, device, or circuit are combined in a different manner, and/or replaced or supplemented by other components or their equivalents.

Therefore, other implementations, other embodiments, and equivalents to the claims are also within the scope of the following claims.

## Claims

1. A resource allocation method comprising:
based on a determination that resource allocation of a physical uplink control channel (PUCCH) format 1 is to be performed, determining whether a signal reception environment is a high speed train (HST) environment;
in response to the signal reception environment being the HST environment according to a result of the determination, determining whether a number of HST terminals is less than a predetermined threshold value; and
in response to the number of HST terminals being less than the predetermined threshold value, allocating a resource of the PUCCH
format 1 by setting a number of orthogonal sequences (OSs) to 1.

2. The resource allocation method of claim 1, wherein
the determining of whether the signal reception environment is the HST environment comprises:
in response to a base station being located in a predetermined HST cell, determining the signal reception environment to be the HST environment.

3. The resource allocation method of any one of claims 1 and 2, wherein
the determining of whether the signal reception environment is the HST environment comprises:
determining that a terminal of which a frequency offset reported in response to receiving a physical uplink shared channel (PUSCH) signal is greater than or equal to a predetermined reference value is in the HST environment.

4. The resource allocation method of any one of claims 1 to 3, wherein
the determining of whether the signal reception environment is the HST environment comprises:
in response to a speed of a terminal reported by the terminal being greater than or equal to a predetermined speed, determining that the terminal is in the HST environment.

5. The resource allocation method of any one of claims 1 to 4, wherein the allocating of the resource of the PUCCH format 1 by setting the number of OSs to 1 in response to the number of HST terminals being less than the predetermined threshold value comprises:
assigning a same OS value and a different cyclic shift (CS) value to an HST terminal within a same resource block (RB).

6. The resource allocation method of any one of claims 1 to 5, wherein in response to the number of OSs being set to 1, a maximum number of users allocable to the same RB is limited to 12.

7. The resource allocation method of any one of claims 1 to 6, further comprising:
receiving the PUCCH format 1 in which the number of OSs is set to 1;
performing user demultiplexing on the PUCCH format 1 using orthogonal characteristics of a cyclic shift to secure received symbol data or a demodulation reference signal (DMRS) for each user equal to a length of the OS; and
estimating a frequency offset using the received symbol data or the DMRS secured for each user, and correcting the PUCCH format 1.

8. The resource allocation method of any one of claims 1 to 7, further comprising: in response to the number of HST terminals being greater than or equal to the predetermined threshold value, allocating the resource of the PUCCH format 1 by setting the number of OSs to 2.

9. The resource allocation method of any one of claims 1 to 8, wherein the allocating of the resource of the PUCCH format 1 by setting the number of OSs to 2 comprises: in response to demultiplexing the OS, allocating a PUCCH resource such that at least two data symbols or DMRSs remain.

10. The resource allocation method of any one of claims 1 to 9, wherein the allocating of the resource of the PUCCH format 1 by setting the number of OSs to 2 comprises:
setting the length of the OS to 4 or 6.

11. The resource allocation method of any one of claims 1 to 10, wherein in response to the number of OSs being set to 2, the maximum number of users allocable to the same RB is limited to 24.

12. The resource allocation method of any one of claims 1 to 11, further comprising:
receiving the PUCCH format 1 in which the number of OSs is set to 2;
performing user demultiplexing on the PUCCH format 1 using orthogonal characteristics of a cyclic shift; and
estimating a frequency offset by performing user demultiplexing, using two or three symbols, based on an OS, and correcting the PUCCH format 1.

13. An electronic device comprising:
memory; and
a processor,
wherein the processor is configured to:
based on a determination that resource allocation of a physical uplink control channel (PUCCH) format 1 is to be performed, determine whether a signal reception environment is a high speed train (HST) environment,
in response to the signal reception environment being the HST environment according to a result of the determination, determine whether a number of HST terminals is less than a predetermined threshold, and
in response to the number of HST terminals being less than the predetermined threshold value, allocate a resource of the PUCCH format 1 by setting a number of orthogonal sequences (OSs) to 1.

14. The electronic device of claim 13, wherein the processor is configured to:
in response to a location of the electronic device being in a predetermined HST cell, determine that the signal reception environment is the HST environment,
determine that a terminal of which a frequency offset reported in response to receiving a physical uplink shared channel (PUSCH) signal is greater than or equal to a predetermined reference value is in the HST environment, and
in response to a speed of a terminal reported by the terminal being greater than or equal to a predetermined speed, determine that the terminal is in the HST environment.

15. The electronic device of any one of claims 13 to 14, wherein
the processor is configured to:
in response to allocating the resource of the PUCCH format 1 by setting the number of OSs to 1, assign a same OS value and a different cyclic shift (CS) value to an HST terminal within a same resource block (RB).
